# EUROPÄISCHE PATENTSCHRIFT

(11) **EP 0 728 975 B1**
(45) Veröffentlichungstag und Bekanntmachung des Hinweises auf die Patenterteilung: **18.11.1998**
(21) Anmeldenummer: 95102140.1
(22) Anmeldetag: 16.02.1995
(51) Int. Cl.: F16L 3/237, F16L 3/14

(54) **Vorrichtung zur Halterung von Strängen wie Kabeln oder Schläuchen an einer Wand oder einer Decke**
Device for holding elongated articles such as cables or hoses on walls or ceilings
Dispositif pour le support d'articles allongés tels que câbles ou tuyaux flexibles sur une paroi ou un plafond

(43) Veröffentlichungstag der Anmeldung: 28.08.1996
(73) Patentinhaber: HILBIG SCHWEISSTECHNIK GmbH, D-21079 Hamburg (DE)
(72) Erfinder: Hilbig, Siegfried, Dipl.-Ing., D-21079 Hamburg (DE)
(74) Vertreter: Patentanwälte Hauck, Graalfs, Wehnert, Döring, Siemons

(56) Entgegenhaltungen:
- DE-U- 9 300 749

## Beschreibung

Die Erfindung bezieht sich auf eine Vorrichtung zur Halterung von Strängen, wie Kabeln, Schlächen oder dergleichen an einer Wand oder einer Decke nach dem Oberbegriff des Anspruchs 1.

Kabel, Schläuche oder dergleichen werden im Schiffbau häufig an Decken aufgehängt. In diesem Zusammenhang ist bekanntgeworden, Kunststoffrohre zu verwenden, durch welche die Stränge hindurchgezogen werden. Die Kunststoffrohre werden mit Hilfe konventioneller Halter an der Decke angebracht. Kostengünstiger Kunststoff hat jedoch den Nachteil, daß er leicht entflammbar ist. Er bietet daher im Brandfalle keine ausreichende Sicherheit, vielmehr besteht Gefahr, daß die Kabel herunterfallen. Hochwertiger Kunststoff, der temperaturbeständiger ist, ist jedoch verhältnismäßig aufwendig.

Aus DE-U-93 00 749 ist eine Vorrichtung bekanntgeworden, die einen Steg aus verschweißbarem Drahtmaterial vorsieht, an dessen Enden ringartige Ösen geformt sind zur Aufnahme des Stranges. Die Ösen liegen vorzugsweise in parallelen Ebenen. Am Steg ist ein quer dazu verlaufender Ansatz vorgesehen. Über diesen kann mit Hilfe der Bolzenschweißtechnik der Steg mit den Halteösen an einer Wand oder einer Decke aus Stahl angebracht werden. Der Ansatz wird von zwei annähernd parallel abgebogenen Abschnitten des Steges gebildet.

Der Erfindung liegt die Aufgabe zugrunde, eine Vorrichtung der genannten Art dahingehend zu verbessern, daß die Haltekraft des angeschweißten Ansatzes durch auf den Steg wirkende Quer- oder Längskräfte nicht beeinträchtigt werden soll.

Diese Aufgabe wird durch die Merkmale des Patentanspruchs 1 gelöst.

Bei der erfindungsgemäßen Vorrichtung ist aus einem Abschnitt des Ansatzes durch Quetschung ein Vorsprung gebildet, der mit dem anderen Abschnitt verschweißt ist. Dadurch wird verhindert, daß bei einer auf den Steg wirkenden Quer- oder Längskraft die Abschnitte auseinandergebogen werden. Dadurch wird zum einen die Haltekraft beeinträchtigt. Zum anderen besteht die Gefahr, daß eine derartige Verbiegung zur Beeinträchtigung der Schweißstelle führt, über die der Ansatz mit einer Wand oder einer Decke mit Hilfe der Bolzenschweißtechnik verbunden ist. Es versteht sich, daß die Verschweißung ausreichend stabil ist, um entsprechenden Belastungen standzuhalten.

Nach einer Ausgestaltung der Erfindung sind die Abschnitte nahe dem Steg aneinander anliegend und in diesem Bereich verschweißt. Dies vereinfacht die Fertigung.

Wie schon mehrfach erwähnt, wird der Ansatz nach der Bolzenschweißtechnik mit einer Wand oder einer Decke verbunden. Das Bolzenschweißverfahren wird nach einer Ausgestaltung der Erfindung dadurch erleichtert, daß am freien Ende des Ansatzes eine Kerbe geformt ist. Beispielsweise kann eine Kreuzkerbe durch Einschneiden oder eine andere Verformung gebildet werden. Bei einer derartigen Aufrauhung, die zu einer Art Gratbildung führt, wird das Anschweißen des Ansatzes merklich erleichtert, besonders bei lackiertem Grundmaterial.

Die vorzugsweise einteilig hergestellte erfindungsgemäße Halterung ist aus relativ kostengünstigem Material zu fertigen, wie Stahl, Aluminium oder dergleichen und läßt sich mit Hilfe herkömmlicher Bolzenschweißtechnik innerhalb kürzester Zeit an einer Decke oder einer Wand befestigen. Der anzubringende Strang wird durch die Ösen hindurchgezogen und in ausreichender Weise gehaltert.

Die erfindungsgemäße Halterung sorgt außerdem im Brandfall für eine ausreichende Sicherheit.

Die Erfindung wird nachfolgend anhand von Zeichnungen näher erläutert.
- Fig. 1: zeigt perspektivisch eine Vorrichtung nach der Erfindung.
- Fig. 2: zeigt einen Teil der Vorrichtung nach Fig. 1 in einer Schweißvorrichtung.
- Fig. 3: zeigt die Ansicht der Vorrichtung nach Fig. 1 in Richtung Pfeil 3.

Eine Vorrichtung 10 ist einteilig aus einem Runddraht 12 geformt, beispielsweise aus Stahl. Zwischen zwei zueinander ausgerichteten geraden Stegabschnitten 14, 16 sind zwei parallel verlaufende Abschnitte 18, 20 abgebogen. Sie weisen über ihre wesentliche Länge nur einen relativ geringen Abstand voneinander auf. Dadurch ist ein stiftartiger Ansatz 20 gebildet. An den Enden der Stegabschnitte 14, 16 sind ringartige Ösen 22, 24 geformt, die in parallelen beabstandeten Ebenen angeordnet sind. Die Ebenen der Ringösen 22, 24 erstrecken sich senkrecht zur Achse der Stegabschnitte 14, 16.

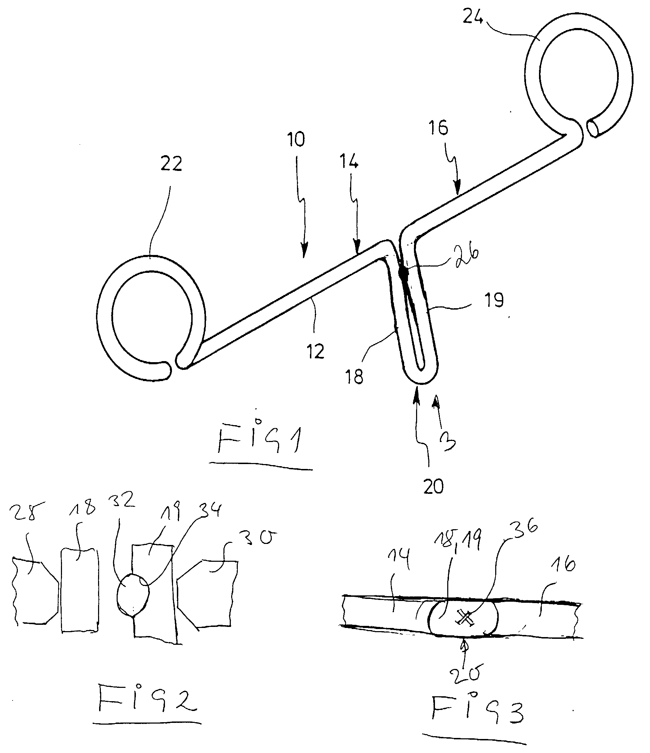

Wie aus Fig. 1 ferner zu erkennen, sind die Abschnitte 18, 19 nahe den Stegabschnitten 14, 16 in Richtung aufeinander zu gebogen und in einem Punktbereich 26 miteinander verschweißt. Die Verschweißung bildet eine relativ feste Verbindung, die verhindert, daß bei einer Längs- oder Querbelastung der Stege 14, 16 die Abschnitte 18, 19 auseinandergebogen werden.

In Fig. 2 sind kurze Stücke der Abschnitte 18, 19 dargestellt zwischen einer Schweißzange, deren Elektroden bei 28 bzw. 30 angedeutet sind. Man erkennt ferner, daß im Ansatzabschnitt 19 durch Quetschung ein balliger Vorsprung 32 geformt ist in Richtung auf den gegenüberliegenden Abschnitt 18. Der Abschnitt 19 ist bei 34 entsprechend ausgenommen. Diese Ausnehmung befindet sich auch auf der gegenüberliegenden Seite des Abschnittes 19. Beim Schweißverfahren werden die Abschnitte 18, 19 gegeneinander gehalten, so daß der Vorsprung 32 mit dem Abschnitt 18 verschweißt wird.

In Fig. 3 zu erkennen, daß das freie Ende des Ansatzes 20 mit einer kreuzförmigen Einkerbung 36 versehen ist, die durch Stauchen oder dergleichen erzeugt wird und dadurch eine Aufrauhung des freien Endes bewirkt, wodurch ein besseres Verschweißen mit einer Decke oder einer Wand nach der Bolzenschweißtechnik erfolgen kann.

Die komplette Vorrichtung 10 kann von einer geeigneten Schweißpistole aufgenommen werden, und der Ansatz 20 wird im Bolzenschweißverfahren an der Wand oder Decke, zum Beispiel von einem Schiff, verschweißt. Durch die Halte- oder Ringösen 22, 24 werden ein oder mehrere Kabel oder Schläuche hindurchgeführt.

Wird der Ansatz 20 zum Beispiel an einer Decke durch Schweißen angebracht, versteht sich, daß die Ösen 22, 24 nach unten weisen, um ein oder mehrere Stränge hängend zu halten. Ferner können die Stegabschnitte ausgebogen werden, z.B. um etwa 90°, so daß auch die Halteösen im Winkel von 90° zueinander stehen. Dadurch kann der aufgenommene Strang um einen Bogen von 90° geführt werden.

Die Länge der Vorrichtung beträgt zum Beispiel 280 mm. Die Dicke des Drahtes 12 beträgt zum Beispiel 6 mm. Der Ansatz 20 hat zum Beispiel eine Länge von 60 mm.

## Patentansprüche

1. Vorrichtung zur Halterung von Strängen, wie Kabeln, Schläuchen oder dergleichen an einer Wand oder einer Decke aus Stahl, die den Strang ringartig umgibt, mit an den Enden eines Steges (14, 16) aus verschweißbarem Drahtmaterial (12) angeformten Ösen (22, 24), die zwecks Aufnahme des Stranges in annähernd parallelen Ebenen liegen, und einem quer zum Steg (14, 16) verlaufenden Ansatz (20), der von zwei annähernd parallel abgebogenen Abschnitten (18, 19) des Steges (14, 16) gebildet ist, dadurch gekennzeichnet, daß aus einem Abschnitt (19) durch Quetschung ein Vorsprung (32) geformt ist, der mit dem anderen Abschnitt (18) verschweißt ist.

2. Vorrichtung nach Anspruch 1, dadurch gekennzeichnet, daß die Abschnitte (18, 19) nahe dem Steg (14, 16) aneinander anliegen und in diesem Bereich verschweißt sind.

3. Vorrichtung nach Anspruch 1 oder 2, dadurch gekennzeichnet, daß die Schweißung (26) punktartig vorgesehen ist.

4. Vorrichtung nach einem der Ansprüche 1 bis 3, dadurch gekennzeichnet, daß im Querschnitt rundes Drahtmaterial (12) verwendet wird.

5. Vorrichtung nach einem der Ansprüche 1 bis 4, dadurch gekennzeichnet, daß am freien Ende des Ansatzes (20) eine Kerbe (36) geformt ist.

## Claims

1. A device made of steel for holding elongated articles such as cables, hoses or the like on a wall or a ceiling, the device encircling the article annularly, the device comprising eyes (22, 24) formed at the ends of a bar (14, 16) of weldable steel material, the eyes (22, 24) extending in parallel spaced planes for the accommodation of the article, and a projection (20) extending transverse to the bar (14, 16) and made of two approximately parallel portions (18, 19) bent off from the bar (14, 16), characterized in that a protrusion (32) is formed by a pinching of one portion (19) and welded to the other portion (18).

2. The device of claim 1, characterized in that the portions (18, 19) engage each other adjacent to the bar (14, 16) and are welded to each other in this area.

3. The device of claim 1 or 2, characterized in that the welding (26) is punctual.

4. The device of one of the claims 1 to 3, characterized in that wire material rounded in cross section is used.

5. The device of one of the claims 1 to 4, characterized in that a notch (36) is formed at the free end of the projection (20).

## Revendications

1. Dispositif pour la fixation de faisceaux, tels que câbles, tuyaux souples ou analogues à une paroi ou un plafond en acier, qui entoure le faisceau à la manière d'un anneau, comportant aux extrémités d'une entretoise (14, 16) des oreilles (22, 24) en fil métallique (12) soudable, qui sont situées dans des plans à peu près parallèles en vue de recevoir le faisceau, et un appendice (20) disposé transversalement à l'entretoise (14, 16), qui est formé par deux sections (18, 19) de l'entretoise (14, 16) recourbées à peu près parallèlement, caractérisé en ce qu'une partie en saillie (32) est formée par écrasement dans l'une des sections (19) et est soudée à l'autre section (18).

2. Dispositif selon la revendication 1, caractérisé en ce que les sections (18, 19) sont en contact l'une avec l'autre au voisinage de l'entretoise (14, 16) et sont soudées dans cette zone.

3. Dispositif selon la revendication 1 ou 2, caractérisé en ce que la soudure (26) est prévue par points.

4. Dispositif selon l'une des revendications 1 à 3, caractérisé en ce qu'on utilise du fil métallique (12) de section transversale ronde.

5. Dispositif selon l'une des revendications 1 à 4, caractérisé en ce qu'une entaille (36) est formée à l'extrémité libre de l'appendice (20).
